# EUROPÄISCHE PATENTANMELDUNG

(11) **EP 1 398 646 A1**
(43) Veröffentlichungstag der Anmeldung: **17.03.2004**
(21) Anmeldenummer: 03014375.4
(22) Anmeldetag: 26.06.2003
(51) Int. Cl.: G01S 5/14, G01S 5/00, G01S 1/04

(54) **Ortungsvorrichtung**

(30) Priorität: 11.09.2002 DE 10242043
(71) Anmelder: T-Mobile Traffic GmbH, 53121 Bonn (DE)
(72) Erfinder: Gumprich, Volker, Dipl.-Phys., 41468 Neuss (DE); Schmitz, Andreas, Dipl.-Ing., 53639 Königswinter (DE)
(74) Vertreter: Deuschel, Wilhelm

(57) **Zusammenfassung**

Die Erfindung betrifft eine mobile Ortungsvorrichtung (10) mit einem Satellitenempfänger zum Empfang von von mehreren Satelliten abgestrahlten Sendesignalen und mit einem Rechner zur Auswertung der Sendesignale und zur Ermittlung von aktuellen Positionsdaten, wobei der Satellitenempfänger mit dem Rechner in einem eigenen Gehäuse angeordnet ist, das einen Anschluss für eine Versorgungsspannung, eine erste Schnittstelle (11) und eine zweite Schnittstelle (12) aufweist, wobei über die erste Schnittstelle (11) Positionsdaten übertragbar sind und über die zweite Schnittstelle (12) eine Verbindung zur Übertragung und zum Empfang von Daten über eine Mobilfunkeinheit (30) herstellbar ist. Erfindungsgemäß erfolgt die Abwicklung der Schnittstellen-Datenkommunikation durch den Rechner. Der Satellitenempfänger ist an eine Antenne angeschlossen, die mit dem Satellitenempfänger und dem Rechner im gleichen Gehäuse angeordnet ist. Die Erfindung betrifft weiter ein Zielführungssystem, umfassend ein portables Gerät (20) zur Ausgabe von Routeninformationen, eine Mobilfunkeinheit (30) zur Kommunikation mit einer ortsfesten Zentrale und eine mobile Ortungsvorrichtung (10).

## Beschreibung

Die Erfindung betrifft eine mobile Ortungsvorrichtung gemäß dem Oberbegriff des Anspruchs 1 und ein Zielführungssystem, das eine solche mobile Ortungsvorrichtung umfasst.

Die Fahrzeug-Anschlussbox CIB, CarInterface-Box, der Firma Peiker für das portable Gerät iPAQ der Firma Compaq weist einen Satellitenempfänger zum Empfang von Satellitensignalen auf. Die Fahrzeug-Anschlussbox CIB verfügt über ein Gehäuse mit einem Anschluss für eine GPS-Antenne, einem Anschluss für die Versorgungsspannung, mit einer ersten Schnittstelle für die Übertragung von Positionsdaten an das portable Gerät, sowie einer zweiten Schnittstelle zur Herstellung einer Datenverbindung mit einer Mobilfunkeinheit. Über die Mobilfunkeinheit empfangene Daten werden ebenfalls über die erste Schnittstelle an das portable Gerät übertragen. In der Fahrzeug-Anschlussbox ist ein erster Rechner zur Auswertung der Satelliten-Sendesignale und der Ermittlung der aktuellen Position vorgesehen. Der erste Rechner ist Bestandteil des Satellitenempfängers. Der erste Rechner ist über eine dritte Schnittstelle mit einem zweiten Rechner verbunden. Über die dritte Schnittstelle werden'Positionsdaten vom ersten Rechner an den zweiten Rechner übertragen. Der zweite Rechner ist zur Abwicklung der Datenkommunikation vorgesehen, die über ein Multiplexprotokoll über die erste, die zweite und die dritte Schnittstelle stattfindet.

In der WO 98/45724 A1 wird eine Ortungsvorrichtung für Fahrzeuge beschrieben, bei der ein Satellitenempfänger zum Empfang von Satellitensignalen zusammen mit einem Rechner und einer Antenne in einem Gehäuse untergebracht ist. Die Ortungsvorrichtung dient zur Ermittlung der aktuellen Position. Das Gehäuse weist einen Anschluss für Versorgungsspannung und eine Schnittstelle zur Übertragung der Positionsdaten auf.

Der Erfindung liegt nun die Aufgabe zugrunde, eine einfache und kostengünstige Realisierung einer Ortungsvorrichtung anzugeben. Außerdem soll eine einfache Realisierung eines Zielführungssystems angegeben werden.

Diese Aufgabe wird für die Ortungsvorrichtung durch die Merkmale des Anspruchs 1 und für das Zielführungssystem durch die Merkmale des Anspruchs 9 gelöst. Die abhängigen Ansprüche betreffen vorteilhafte Aus- und Weiterbildungen der Erfindung.

Die Erfindung ermöglicht eine einfache und kostengünstige Realisierung einer Ortungsvorrichtung für ein kommunikationsfähiges Zielführungssystem. Dabei stellt die Ortungsvorrichtung Positionsdaten über eine erste Schnittstelle zur Verfügung und verfügt über eine zweite Schnittstelle zur Verbindung mit einer Mobilfunkeinheit. Dabei multiplext die Ortungsvorrichtung die ermittelten Positionsdaten und die Datenkommunikation mit der Mobilfunkeinheit auf die erste Schnittstelle über die vorteilhafterweise ein portables Gerät angeschlossen wird. Dies ermöglicht, dass über eine einzige Schnittstelle alle Daten zur Verfügung gestellt werden können, die von einem Rechner, z. B. einem portablen Gerät zum Ausführen einer Zielführurigsfunktion mit Zentralenunterstützung benötigt werden. Der Aufbau der Ortungsvorrichtung ist dabei besonders einfach und preisgünstig, da der Rechner, der zur Auswertung der Satellitensignale und zur Ermittlung der Positionsdaten verwendet wird, auch zur Abwicklung der Datenkommunikation über die Schnittstellen, also zur Ausführung des Multiplex/Demultiplex-Protokolls, verwendet wird. Die Ortungsvorrichtung kommt also mit einem Rechner für beide Aufgaben aus. Besonders einfach ist der Aufbau der Ortungsvorrichtung auch dadurch, dass die Antenne mit in dem Gehäuse der Ortungsvorrichtung integriert ist, so dass ein weiterer Anschluss sowie eine externe Antenne eingespart werden.

In einer vorteilhaften Ausgestaltung der Erfindung kann der Anschluss für eine externe Antenne an der Ortungsvorrichtung vorgesehen sein, um optional die Möglichkeit zu bieten, zusätzlich eine externe Antenne anzuschließen. Diese zusätzliche Antenne verbessert den Empfang der Satellitensignale, insbesondere wenn sie in einem Fahrzeug außen, z. B. auf dem Dach angebracht wird.

Die von der Ortungsvorrichtung zur Verfügung gestellten Positionsdaten umfassen vorteilhafterweise neben den Ortskoordinaten noch Informationen zur Zeit, zum Datum, zur Bewegungsrichtung, sowie zur Geschwindigkeit. Diese Daten werden im portablen Gerät verwendet, um die Zielführung durchzuführen. Dadurch wird die Zielführung genauer und zuverlässiger.

In einer vorteilhaften Weiterbildung der Erfindung wird die Aufgabe der Auswertung der Satellitensignale und Ermittlung der Positionsdaten von einer ersten Software-Funktion, die auf dem Rechner in der Ortungsvorrichtung abläuft, ausgeführt. Eine zweite Software-Funktion auf dem Rechner führt das Multiplex-Protokoll sowie das Demultiplex-Protokoll zur Abwicklung der Datenkommunikation aus.

In einer vorteilhaften Ausführung der Erfindung ist die Ortungsvorrichtung für den Einsatz in einem Fahrzeug vorgesehen, so dass die aktuelle Position z. B. für die Realisierung einer Fahrzeug-Zielführung ermittelt wird. Hierfür werden die ermittelten Positionsdaten über die erste Schnittstelle ein portables Gerät übermittelt. Bei dem portablen Gerät kann es sich dabei um ein Standardgerät handelt, beispielsweise einen iPAQ der Firma Compaq oder ein ähnliches Gerät. Das portable Gerät kann sich beispielsweise in einer besonderen Halterung befinden, in das es bei Benutzung im Fahrzeug eingesteckt werden kann. So muss das Gerät nicht ständig im Fahrzeug installiert sein und kann bei Verlassen des Fahrzeuges vom Benutzer mitgenommen werden.

Vorteilhafterweise umfasst die Ortungsvorrichtung neben dem Satellitenempfänger noch mindestens einen weiteren Sensor, der die Fahrzeugbewegung erfassen kann. Dies kann z. B. ein Gyro-Sensor, ein Beschleunigungsmesser, ein Höhenmesser oder ähnliches sein. Besonders vorteilhaft ist'die Ausgestaltung des Gyro-Sensors zur Erfassung der Drehbeschleunigüng des Fahrzeuges in drei Dimensionen.

Die Erfindung ermöglicht eine einfache Realisierung eines Off-Board-Zielführungssystems eines Fahrzeuges und/oder eines Fußgängers. Die Off-Board-Zielführüng erfolgt mit Unterstützung einer ortsfesten Zentrale. Eine gewünschte Zielposition wird durch den Benutzer in das portable Gerät eingegeben. Über das Mobilfunkgerät wird die gewünschte Zielposition gemeinsam mit der Startposition an die Zentrale übermittelt. Bei der Startposition kann es sich um die aktuelle Position handeln, die von der Ortungsvorrichtung ermittelt wird. die Startposition kann aber auch vom Benutzer in das portable Gerät eingegeben werden. In der Zentrale wird eine Fahrtroute von der Startposition zur gewünschten Zielposition berechnet und die Route als aufeinanderfolgende Wegepunkte, die auf dem Weg zur Zielposition passiert werden müssen, von der Zentrale an das Zielführungssystem übertragen. Die Route wird an den Benutzer unter Berücksichtigung der fortlaufend von der Ortungsvorrichtung ermittelten aktuellen Positionsdaten in Form von Fahrhinweisen ausgegeben. Hierfür übermittelt vorteilhafterweise die Ortungsvorrichtung die ermittelten Positionsdaten an das portable Gerät. Die Ausgabe der Fahrhinweise erfolgt über das portable Gerät. Dabei umfassen Wegepunkte mindestens geographische Ortskoordinaten. Vorteilhafterweise kommt ein Verfahren zur Off-Board-Navigation zur Anwendung, wie es in DE 100 14 806 A1 beschrieben ist. Vorzugsweise wird die Route, wie in DE 100 14 806 A1 beschrieben, in der Zentrale aufgrund von vorgebbaren Attributen berechnet und/oder es wird eine dynamisierte Route berechnet. Auch die in DE 100 14 806 A1 beschriebene Berechnung in Teilrouten ist vorteilhaft, um eine komfortable Benutzung bei großen Datenmengen zu ermöglichen.

Vorteilhafterweise sind alle Komponenten des Zielführungssystems portabel ausgebildet, so dass die Zielführung von Fußgängern ebenso möglich ist wie die Fahrzeugzielführung.

Ein besonders einfacher und kostengünstiger Einbau des Zielführungssystems in ein Fahrzeug ergibt sich, wenn das portable Gerät im Fahrzeug in eine Halterung einsteckbar ist, wo der Anschluss an eine Spannungsversorgung hergestellt wird. Die einzige weitere benötigte Schnittstelle des portablen Gerätes ist dann die Schnittstelle, über die die physikalische Verbindung zur Ortungsvorrichtung hergestellt wird. Über diese Schnittstelle des portablen Gerätes findet dann die bidirektionale Datenkommunikation des portablen Gerätes statt. Diese bidirektionale Datenkommunikation umfasst die Positionsdaten, die von der Ortungsvorrichtung an das portable Gerät gesendet werden, und die Datenkommunikation über das Mobilfunkgerät. Dabei wird eine physikalische Verbindung vom Mobilfunkgerät zur der Ortungsvorrichtung und eine physikalische Verbindung von der Ortungsvorrichtung zum portablen Gerät hergestellt. Die Datenkommunikation zwischen dem portablen Gerät und der Zentrale über das Mobilfunkgerät findet dann über die physikalischen Verbindungen zwischen Mobilfunkgerät und Ortungsvorrichtung sowie zwischen Ortungsvorrichtung und portablem Gerät statt. Die Ortungsvorrichtung multiplext dabei vom Mobilfunkgerät empfangene Daten zusammen mit den in der Ortungsvorrichtung ermittelten Positionsdaten auf die Verbindung zwischen Ortungsvorrichtung und portablem Gerät. In analoger Weise demultiplext die Ortungsvorrichtung die von dem portablen Gerät empfangenen Daten in Daten, die für die Ortungsvorrichtung bestimmt sind, und in Daten, die an die Mobilfunkeinheit gerichtet sind. Daten, die an die Ortungsvorrichtung gerichtet sind umfassen z. B. Daten zur Initialisierung oder zum Erneuern der Software. Daten zur Initialisierung der Ortungsvorrichtung oder zum Erneuern der Software der Ortungsvorrichtung können über die Mobilfunkeinheit, z. B. von der Zentrale empfangen werden.

Bevorzugte Ausführungsbeispiele der Erfindung werden anhand der zugehörigen Zeichnungen nachfolgend beschrieben. Es zeigen jeweils in schematischer Darstellung,
- Fig. 1: eine Ortungsvorrichtung,
- Fig. 2: die Ortungsvorrichtung in einem ersten Modus der Kommunikationsabwicklung,
- Fig. 3: die Ortungsvorrichtung in einem zweiten Modus der Kommunikationsabwicklung.

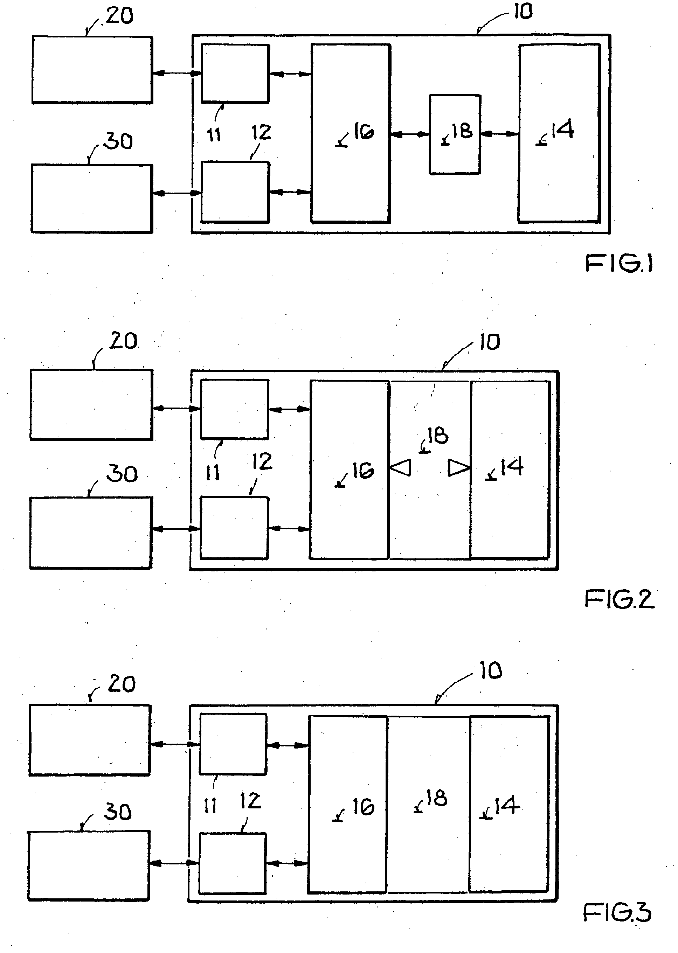

In Fig. 1 ist ein Zielführungssystem, umfassend die Ortungsvorrichtung 10, ein portables Gerät 20, z. B. einem PDA, Personal Digital Assistant, und eine Mobilfunkeinheit 30, dargestellt. Die Ortungsvorrichtung 10 umfasst eine erste Schnittstelle 11 und eine zweite Schnittstelle 12, die vorzugsweise als serielle Schnittstellen ausgebildet sind. Eine erste Software-Funktion 14 wertet die über eine nicht dargestellte Antenne und einen nicht dargestellten Satellitenempfänger empfangenen Satellitensignale eines Global Positioning Systems, GPS, aus und ermittelt daraus die aktuellen Positionsdaten. Die erste Software-Funktion 14 und die zweite Software-Funktion 16 laufen auf dem Rechner der Ortungsvorrichtung ab. Eine zweite Software-Funktion 16 wickelt die Datenkommunikation über die Schnittstellen 11 und 12 ab. Die zweite Software-Funktion 16 kommuniziert über eine Software-Schnittstelle 18 mit der ersten Software-Funktion 14 und umgekehrt. Dies ermöglicht die saubere Trennung' der beiden Funktionen. In einer vorteilhaften Ausgestaltung der Erfindung ist der Rechner in den Satellitenempfänger integriert.

Die zweite Software-Funktion 16 kontrolliert beide Schnittstellen 11 und 12 und benutzt die Software-Schnittstelle 18 zur Kommunikation mit der ersten Software-Funktion 14.

In Fig. 2 ist ein erster Modus der Kommunikationsabwicklung dargestellt. Hier werden über die Software-Schnittstelle 18 Positionsdaten von der ersten Software-Funktion 14 an die zweite Software-Funktion 16 übertragen und von der zweiten Software-Funktion über die erste Schnittstelle 11 ausgegeben. In diesem Modus werden die' Positionsdaten in regelmäßigen kurzen Abständen an das mobile Gerät ausgegeben, vorteilhaft sind hier Abstände von ca. 200 ms bis 1 s. Besonders vorteilhaft ist ein Abstand von 500 ms.

Vorzugsweise wird beim Einschalten des Zielführungssystems die letzte gespeicherte Position sowie die aktuelle Uhrzeit von dem portablen Gerät 20 in die Ortungsvorrichtung 10 übertragen. Dadurch kann eine schnellere erste -Ermittlung der aktuellen Position durchgeführt werden, d. h. die sog. TTFF, time to first fix - Zeitdauer bis zum ersten Positionsfix, wird kürzer.

Der erste Modus der Kommunikationsabwicklung stellt einen seriellen paketorientierten Modus zwischen dem portablen Gerät 20 und der zweiten Software-Funktion 16 dar. Es wird das Multiplexen der Daten der zweiten Schnittstelle 12 und der Positionsdaten auf die erste Schnittstelle 11 ausgeführt. Hierbei werden die über die Software-Schnittstelle 18' von der ersten Software-Funktion 14 empfangenen Daten paketiert, mit Header-Informationen versehen und über die Software-Schnittstelle 11 ausgegeben. Die Header-Informationen enthalten dabei Informationen zur Kommunikationsabwicklung, z. B. an welches Gerät oder an welche Funktion die Daten gerichtet sind, die Datenlänge, von welchem Gerät oder von welcher Funktion die Daten gesendet wurden. Die über die zweite Schnittstelle 12 von der Mobilfunkeinheit 20 empfangenen Daten werden ebenfalls paketiert, mit Header-Informationen versehen und über die Schnittstelle 11 an das portable Gerät 20 ausgegeben. Es wird weiter das Demultiplexen der Daten der ersten Schnittstelle 11 auf Positionsdaten und auf Daten zur Übertragung über die zweite Schnittstelle 12 ausgeführt. Hierbei werden die von dem portablen Gerät 20 über die erste Schnittstelle 11 empfangenen Daten, die mit Header-Informationen versehen sind, depaketiert. Es wird anhand der Header-Informationen festgestellt, ob die Daten für die erste Software-Funktion 14 bestimmt sind oder für die Mobilfunkeinheit 30 bestimmt sind. Die Daten, die für die erste Software-Funktion 14 bestimmt sind, werden über die Software-Schnittstelle 18 an die erste Software-Funktion 14 übermittelt. Die Daten, die für die Mobilfunkeinheit 30 bestimmt sind, werden über die zweite Schnittstelle 12 an die Mobilfunkeinheit 30 übermittelt.

In Fig. 3 ist ein zweiter Modus der Kommunikationsabwicklung dargestellt. Der hier dargestellte zweite Modus stellt einen transparenten Transfer-Modus dar, bei dem von der Mobilfunkeinheit 30 empfangene Daten unverändert an das Gerät 20 weitergegeben werden und vom Gerät 20 empfangene Daten unverändert an die Mobilfunkeinheit 30 weitergegeben werden. Zwischen dem in Fig. 2 dargestellten ersten Modus und dem in Fig. 3 dargestellten zweiten Modus kann umgeschaltet werden. Die Umschaltung erfolgt durch eine spezielle, vom portablen Gerät an die zweite Software-Funktion 16 übertragene Datensequenz.

Der in Fig. 3 dargestellte Modus dient z. B. für eine direkte Internet-Verbindung des portablen Gerätes 20. In diesem Modus werden keine Daten über die Software-Schnittstelle 18 übertragen. Die Umschaltung vom zweiten Modus in den ersten Modus erfolgt durch eine spezielle Datensequenz, die vom portablen Gerät an die zweite Software-Funktion 16 übertragen wird. Die spezielle Datensequenz wird von der zweiten Software-Funktion 16 nicht an das Mobilfunkgerät 30 weitergegeben, sondern bewirkt eine Umschaltung in den ersten Modus.

## Patentansprüche

1. Mobile Ortungsvorrichtung (10) mit einem Satellitenempfänger zum Empfang von von mehreren Satelliten abgestrahlten Sendesignalen und mit einem Rechner zur Auswertung der Sendesignale und zur Ermittlung von aktuellen Positionsdaten, wobei der Satellitenempfänger mit dem Rechner in einem eigenen Gehäuse angeordnet ist, das einen Anschluss für eine Versorgungsspannung, eine erste Schnittstelle (11) und eine zweite Schnittstelle (12) aufweist, wobei über die erste Schnittstelle (11) Positionsdaten übertragbar sind und über die zweite Schnittstelle (12) eine Verbindung zur Übertragung und zum Empfang von Daten über eine Mobilfunkeinheit (30) herstellbar ist,
**dadurch gekennzeichnet,**
**dass** der Satellitenempfänger an eine Antenne angeschlossen ist und die Antenne mit dem Satellitenempfänger und dem Rechner im gleichen Gehäuse angeordnet ist und die Abwicklung der Schnittstellen-Datenkommunikation durch den Rechner erfolgt.

2. Mobile Ortungsvorrichtung (10) nach Anspruch 1,
**dadurch gekennzeichnet,**
**dass** die Auswertung der Sendesignale und die Ermittlung der aktuellen Positionsdaten durch eine erste Software-Funktion (14) auf dem Rechner und die Abwicklung der Datenkommunikation durch eine zweite Software-Funktion (16) auf dem Rechner ausgeführt wird.

3. Mobile Ortungsvorrichtung nach einem der vorhergehenden Ansprüche,
**dadurch gekennzeichnet,**
**dass** die Abwicklung der Datenkommunikation das Multiplexen der Daten der zweiten Schnittstelle (12) und der Positionsdaten auf die erste Schnittstelle (11) umfasst.

4. Mobile Ortungsvorrichtung nach einem der vorhergehenden Ansprüche,
**dadurch gekennzeichnet,**
**dass** die Abwicklung der Datenkommunikation das Demultiplexen der Daten der ersten Schnittstelle (11) auf Positionsdaten und auf Daten zur Übertragung über die zweite Schnittstelle (12) umfasst.

5. Mobile Ortungsvorrichtung nach einem der vorhergehenden Ansprüche,
**dadurch gekennzeichnet,**
**dass** über die erste Schnittstelle (11) eine physikalische Verbindung zum Datenaustausch mit einem portablen Gerät (20) herstellbar ist.

6. Mobile Ortungsvorrichtung nach einem der vorhergehenden Ansprüche,
**dadurch gekennzeichnet,**
**dass** über die erste Schnittstelle (11) und/oder die zweite Schnittstelle (12) neue Software für den Rechner der Ortungsvorrichtung (10) empfangbar ist.

7. Mobile Ortungsvorrichtung nach einem der vorhergehenden Ansprüche,
**dadurch gekennzeichnet,**
**dass** die Ortungsvorrichtung (10) für Fahrzeuge vorgesehen ist.

8. Mobile Ortungsvorrichtung nach Anspruch 7,
**dadurch gekennzeichnet,**
**dass** in dem Gehäuse der mobilen Ortungsvorrichtung (10) mindestens ein weiterer Sensor zur Erfassung der Bewegung des Fahrzeuges vorgesehen ist.

9. Zielführungssystem, umfassend ein portables Gerät (20) zur Ausgabe von Routeninformationen, eine Mobilfunkeinheit (30) zur Kommunikation mit einer ortsfesten Zentrale und eine mobile Ortungsvorrichtung (10) gemäß einem der Ansprüche 1 bis 8.

10. Zielführungssystem nach Anspruch 9,
**dadurch gekennzeichnet,**
**dass** die Positionsdaten von der Ortungsvorrichtung (10) an das portable Gerät (20) übertragen werden.

11. Zielführungssystem nach Anspruch 9 oder 10,
**dadurch gekennzeichnet,**
**dass** die physikalische Verbindung zum Datenaustausch zwischen dem portablen Gerät (20) und der Mobilfunkeinheit (30) über die Ortungsvorrichtung (10) geführt ist.
